# EUROPEAN PATENT SPECIFICATION

(11) **EP 4 532 431 B1**
(45) Date of publication and mention of the grant of the patent: **18.03.2026**
(21) Application number: 23727894.0
(22) Date of filing: 19.05.2023
(51) Int. Cl.: C03B 23/045, B65G 47/90

(54) **CHUCK FOR HANDLING A GLASS TUBE LOADED THEREIN**
SPANNFUTTER ZUR HANDHABUNG EINES DARIN GELADENEN GLASROHRS
MANDRIN POUR LA MANIPULATION D'UN TUBE EN VERRE CHARGÉ EN SON SEIN

(30) Priority: 27.05.2022 IT 202200011291
(43) Date of publication of application: 09.04.2025
(73) Proprietor: Euromatic S.r.l., 24047 Treviglio (BG) (IT)
(72) Inventor: GUSMINI, Giorgio, 24047 Treviglio (BG) (IT)
(74) Representative: Dragotti & Associati S.P.A.
(86) International application number: PCT/IB2023/055166
(87) International publication number: WO 2023/228029

(56) References cited:
- EP-A1- 0 895 967
- EP-A1- 0 895 967
- EP-A2- 2 189 425
- EP-A2- 2 189 425
- US-A1- 2021 024 401
- US-A1- 2021 024 401

## Description

The present invention relates to a chuck for handling a glass tube loaded therein.

Special forming machines are used in the serial production of glass containers made from a tube for medical use (vials, bottles, cartridges and syringes).

These are products with a certain complexity, and in order to meet increasingly strict quality requirements, they require a very precise forming process.

In particular, for syringes, there are provided devices, stations or in-line assemblies, which act on the glass tube, cutting it and forming it in order to produce the tip and the flange, which are present on the body of the syringe.

This all takes place semi-automatically, as this production allows particularly high hourly production rates.

It must also be observed that handling of the single glass tube, at least 1.5 m in length, from which a certain number of syringes all without any marks on their body and completely identical to one another in shape must be produced, is particularly delicate.

Therefore, there are produced heads or crowns carrying a series of chucks or grippers that receive the single glass tube and handle it in first place to proceed with forming of the tip.

This assembly of chucks or grippers must operate in complete synchronism with one another to carry the tube or at least a portion thereof to be handled by means of specific extensions or fingers provided by the chuck.

Likewise, the lengths that have been provided at one end thereof with a tip must then be treated in order to create a flange at the other end in accordance with the established standards.

In general, these chucks are suitable for the specific operation they must carry out and are controlled by toothed crowns or gears and chains that are somewhat noisy and are subject to stretching, undesirable and damaging for operating precision.

Moreover, the fingers of the chuck are connected to levers and joints with multiple fulcrums for the transmission of motion that makes them difficult to adjust, and are subject to wear in the pivot points between the parts. These lever mechanisms are also directly controlled by levers operatively connected to reaction springs on which it is not possible to act. For example, in order to replace a spring the whole chuck must be disassembled.

An example of these grippers or jaws for handling glass tubes is shown in the document EP 2189425.

EP 895967 by the same applicant relates to a machining head for glass processing machines having high precision and robustness.

EP2189425 relates to a fixing clamp comprising feed channels for glass tubes, moving clamping jaws and related moving actuator with lever operation.

US2021024401 relates to a retention chuck for glass pipes for machines producing glass containers. The retention chuck has a plurality of clamping jaws adjustable by an actuation element and distributed around a centerline of a central supply channel for the glass pipes.

The general object of the present invention is to produce a chuck for handling a glass tube loaded therein which is capable of solving the aforesaid problems of the prior art in a manner that is very simple, inexpensive and particularly functional.

Another object of the present invention is to produce a chuck for handling a glass tube loaded therein which has a particularly simple structure and is easy to adjust even when installed.

Another object of the present invention is to produce a chuck for handling a glass tube loaded therein which has no articulated lever assemblies for controlling the fingers of the chuck.

One more object of the present invention is to identify a chuck for handling a glass tube loaded therein that can be used with the glass tube or semi-finished glass product fed both vertically and horizontally without any problems.

The aforesaid objects are achieved by a chuck for handling a glass tube loaded therein produced according to the independent claim 1 and the subclaims that follow.

The structural and functional features of the present invention and its advantages in relation to the current state of the art will be even clearer and more apparent from an examination of the following description, which refers to the accompanying schematic drawings, which show an example of embodiment of the invention. In the drawings:
- Fig. 1 is an elevation view in longitudinal section of a chuck for handling a glass tube loaded therein provided with a control lever for moving the fingers in a position of maximum aperture between the fingers;
- Fig. 2 is a view similar to the view of Fig. 1 in which the chuck provides that the movement of the lever controls the movement of the fingers to a position of minimum aperture between the fingers;
- Fig. 3 shows a sectional view of the chuck similar to the previous views in which it is shown how the fingers are engaged on a glass tube inserted therein;
- Fig. 4 shows an enlarged side elevation view of only the lower part with fingers closed on a glass tube;
- Fig. 5 shows an enlarged side elevation sectional view of the same part of the chuck of Fig. 4;
- Fig. 6 shows a perspective view of part of the chuck of Fig. 5 according to the arrows VI-VI from the bottom upwards;
- Fig. 7 shows a sectional view of a further embodiment of a chuck according to the invention in which it is shown how the fingers are engaged on a glass tube inserted therein;
- Figs. 8 and 9 are perspective side elevation views of the chuck of Fig. 7;
- Fig. 10 is an enlarged section of part of the chuck shown in Fig. 8 along the line X-X;
- Fig. 11 is a sectional plan view of the chuck of Fig. 7 along the line XI-XI of Fig. 9.

In the following description, for illustration of the figures identical reference numbers are used to indicate components with the same function. Moreover, for clarity of illustration, some reference numbers may not have been repeated in all the figures.

Indications such as "vertical" and "horizontal", "upper" and "lower" (in the absence of other indications) must be interpreted with reference to the assembly (or operating) conditions and referring to normal terminology in use in current language, where "vertical" indicates a direction substantially parallel to the direction of the gravitational force vector "g" and horizontal indicates a direction perpendicular thereto.

With reference to the figures, provided by way of non-limiting example, there is shown an embodiment of a chuck for handling a glass tube loaded therein, which is used in machines for forming syringes from glass tube that produce the body of the single syringe in series at high speed.

A chuck of this kind is suitable to receive the single glass tube and to retain it during processing of the part which extends outside the chuck whether for forming the tip or for forming the flange.

The chuck shown in the figures, indicated as a whole with 11, comprises an outer structure 12 fixed to the machine frame (not shown), inside which there is provided a rotating part carrying gripping fingers 13, which in the example are three in number for each chuck.

In the example illustrated, the single chuck 11 is arranged vertically relative to the floor surface or ground and receives therein a glass tube 14 of a certain length (usually around 1.5 m). As will be illustrated, this is only one application of the chuck of the invention, as this length, provided with tip shaped end, can also be arranged horizontally, parallel to the floor surface or ground. In this case the chuck receives therein a length of glass tube cut to size to produce a syringe body and previously provided with a tip shaped end portion. On the other end of the length of glass tube, projecting from the chuck, the flange of the syringe body must be produced.

Moreover, a pair of sealed bearings 15, the inner ring of which rotatably supports a first hollow outer body 16, is arranged in the central part of the outer structure 12 of the chuck. These bearings 15 are arranged in a cartridge constrained to the load bearing structure of the chuck.

A second inner body 17, also hollow and essentially tubular, which receives the glass tube 14, is in turn arranged coaxially inside the first tubular hollow outer body 16 according to the axis X of the chuck 11.

The first hollow outer body 16 carries integral therewith, in the top part opposite the part in which the fingers 13 are arranged, a rotor 18 that collaborates with a stator 19 of a direct motorization assembly 20 of the chuck 11. The stator 19 is integral with the outer load bearing structure 12.

Therefore, the stator part of the control servomotor 20 of each of the series of chucks 11 is provided in the upper part constrained to the outer load bearing structure 12 of the machine body. The rotor part of the servomotor of each chuck is instead constrained to the first hollow outer body 16 of the chuck, which is fixed.

The first hollow outer body 16 is provided at a free lower end thereof with an extension 21 enlarged outwards in which there are provided three oriented seats or holes 22 for housing and sliding of the fingers 13, arranged at 120° from one another. The fingers 13 have a circular or oval section, just as the sliding seats. These seats 22 are inclined converging towards the axis X of the chuck 11 by an angle of around 45° so that the ends of the fingers 13, when the fingers 13 are translated inside the seats 22, contact, or do not contact, the glass tube 14.

The seats 22 act as oriented slides in each of which the single finger 13 can translate between a lowered position for gripping the glass tube 14 and a raised position for releasing the glass tube 14.

Consequently, each chuck or gripper 11 is provided with three fingers 13 which can be moved to engage on or disengage from the glass tube 14 and are actuated by means of a control lever 23 external to the chuck and arranged above in a rotating crown of chucks of the machine (not shown). Operation of this control lever 23 determines raising of the fingers 13 or of the second inner body 17 carrying the enlarged extension 21 in which the fingers 13 are positioned, which translates relative to the first hollow outer body 16.

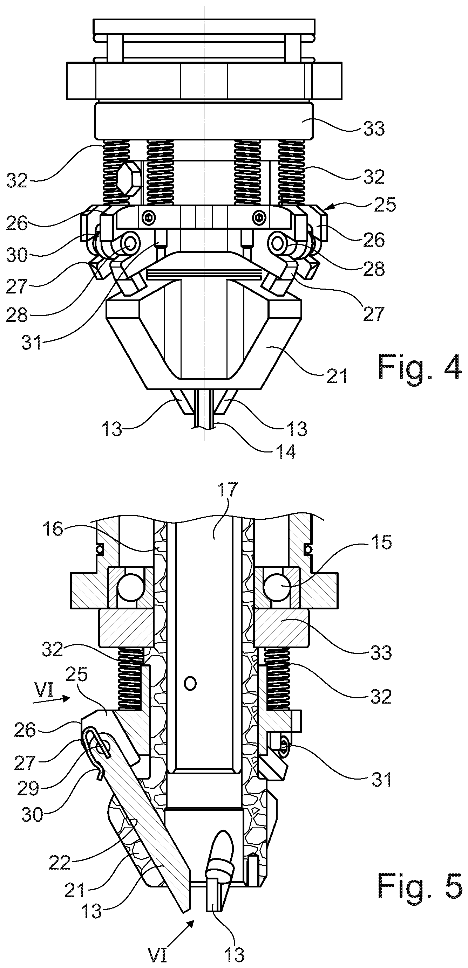

The second inner body 17 carrying the enlarged extension 21 is thus movable axially relative to the load bearing structure 12 and to the first inner body 16. It must be noted that the second inner body 17 is constrained by means of grub screws or lock screws 24 to an annular crown 25 external to both the bodies 16, 17, to which the fingers 13 are constrained in an articulated manner. More precisely, as is also highlighted in Figs. 4, 5 and 6, the annular crown 25 is provided at the top with three pairs of forks 26, arranged at 120° from one another, in outward facing openings 27 of which a pin 28 is positioned. The pin 28 is provided with a through hole 29 in which a cotter pin 30 is positioned, which constrains the finger 13 to said pin 28. Rounded opposite ends of the pin 28 act as sliders inside the outward facing openings 27 of the pairs of forks 26, allowing adaptation of the position of the fingers 13 when the second inner body 17 moves relative to the first outer body 16.

Above the annular crown 25 on respective columns 31 there are provided, for each of the three forks 26, pairs of springs 32 that abut against an upper annular crown 33, integral with the first hollow outer body 16 below the central part of the outer structure 12 in which the pair of bearings 15 is arranged. The series of six springs normally maintain the enlarged extension 21 of the second hollow inner body 17, carrying the fingers 13, normally lowered creating the gripping force of said fingers on the glass tube.

In this way the springs 32 act to maintain the fingers 13, thrust downward engaging on the glass tube 14, idle.

The second hollow inner body 17 thus acts as element for controlling the movement of the fingers 13 between a position engaged on the glass tube 14 and a position disengaged from the glass tube.

The axial movement of the second inner body 17 relative to the first hollow outer body 16 is allowed due to the fact that the grub screws or lock screws 24 of the second inner body 17 to the annular crown 25 pass through axial slots 34 made in the first hollow outer body 16, which can only rotate but cannot move axially.

The chuck of the present invention is identical to the description above when it is used as element for gripping and handling a length of semi-finished glass provided with tip that must be provided at the other end with the customary flange required of syringes.

A chuck of this kind can also operate in a horizontal arrangement without problems of any sort, gripping the part of length of glass tube provided with tip.

The advantages of the new solution of chuck according to the present invention are numerous.

A first advantage is that a chuck of this kind is operated by a respective servomotor individually, and therefore there is no interference or disturbance caused by gears or chains for controlling its rotation.

This is both in its arrangement for producing the tip part of the syringe and for producing the lower flange part transverse to the body of the glass tube.

The provision of a servomotor for controlling each single chuck gives the advantage of uniform rotation, without vibrations caused either by the rotation transmission chain, which is used conventionally, or by a series of gears, more or less with the same effect.

Moreover, a considerable reduction is obtained in the number of parts required to produce the movement of the fingers due to elimination of a series of double fulcrums for transmitting motion to the fingers, which until now was implemented by a series of lever mechanisms articulated to one another.

Further, the arrangement of an annular crown provided with forks for transmitting motion to the fingers also allows the elimination of the series of articulated levers of the prior art.

The arrangement of springs along the perimeter of the annular crown outside the hollow bodies of the chuck allows easy maintenance. In fact, with an arrangement of this kind, replacement thereof is made simpler, as it no longer requires maintenance at the workbench, but can take place with the chuck assembled on the machine.

Moreover, it is possible to calibrate the gripping force due to a micrometric preload system and/or to replace them by operating and rotating the columns 31 to regulate the load of the springs 32.

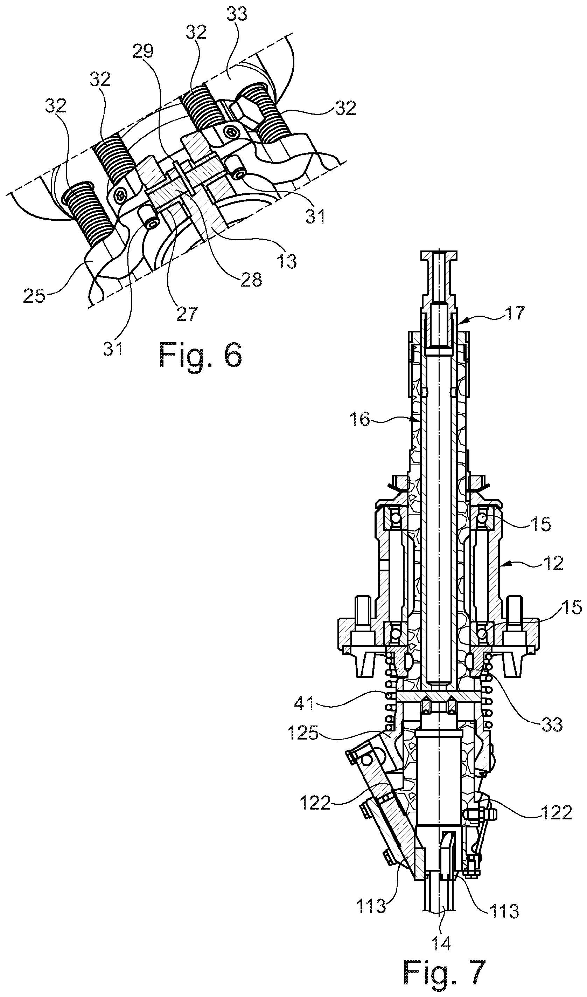

Figs. 7-11 show views of a further embodiment of a chuck according to the invention, showing how the fingers are engaged on a glass tube inserted therein, just as in the previous embodiment.

In this further example, the same elements are indicated with the same reference numbers.

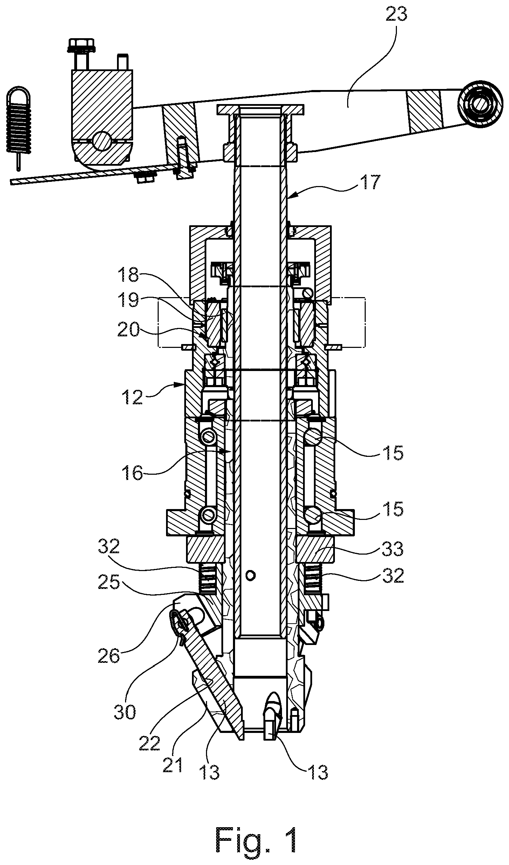

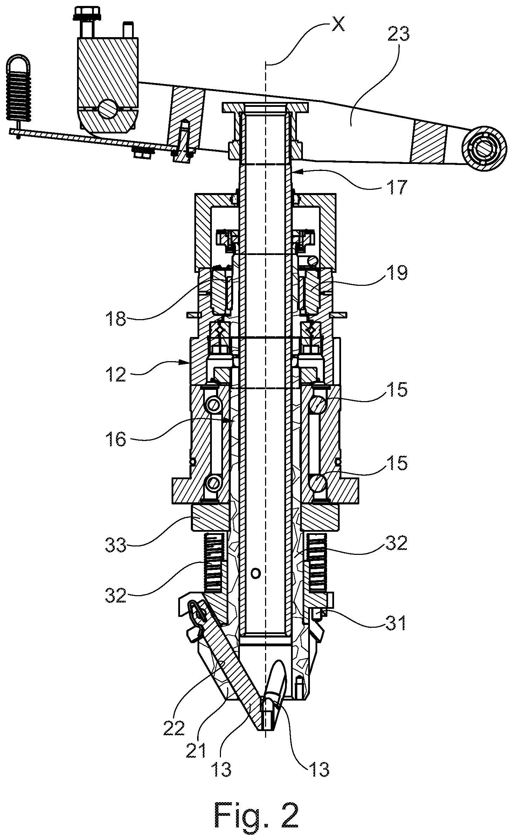

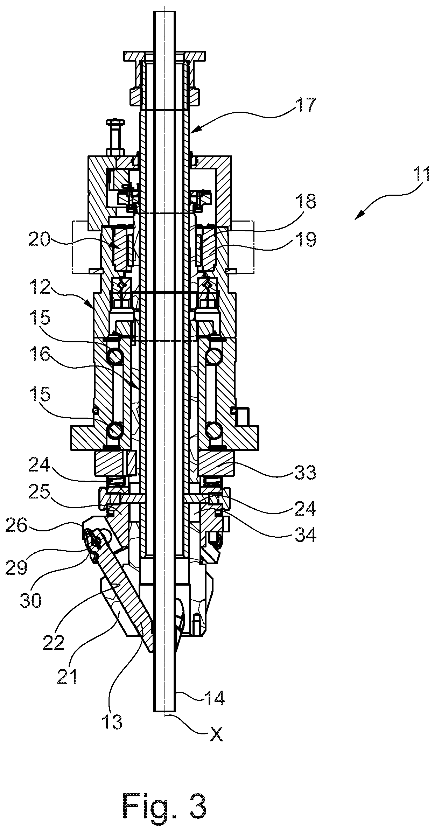

Also in this second example of chuck, it comprises an outer structure 12 fixed to the machine frame inside which there is provided a rotating part carrying gripping fingers 113, which in the example are three in number for each chuck and which are of a different shape relative to those shown in Figs. 1-6.

Also in this case, the first hollow outer body 16 is provided, at a lower free end thereof, with an extension 121 enlarged outwards in which there are provided three oriented seats or holes 122 for housing and sliding of the fingers 113, arranged at 120° from one another. These seats 122 are inclined converging towards the axis X of the chuck 11 by an angle of around 45° so that the ends of the fingers 113, when the fingers 113 are translated inside the seats 122, contact, or do not contact, the glass tube 14.

It must be noted how these fingers 113 have a different shape in quadrilateral section relative to the previous ones of circular or oval shape.

Nonetheless, also in this case the seats 122 act as oriented slides in each of which the single finger 113 can translate between a lowered position for gripping the glass tube 14 and a raised position for releasing the glass tube 14.

Likewise, the three fingers 113 can be moved and are actuated by means of the aforesaid control lever 23 external to the chuck and arranged above in a rotating crown of chucks of the machine (not shown). Operation of this control lever 23 determines raising of the fingers 113, i.e., of the second inner body 17 carrying the enlarged extension 121 in which the fingers 113 are positioned, which translates relative to the first hollow outer body 16.

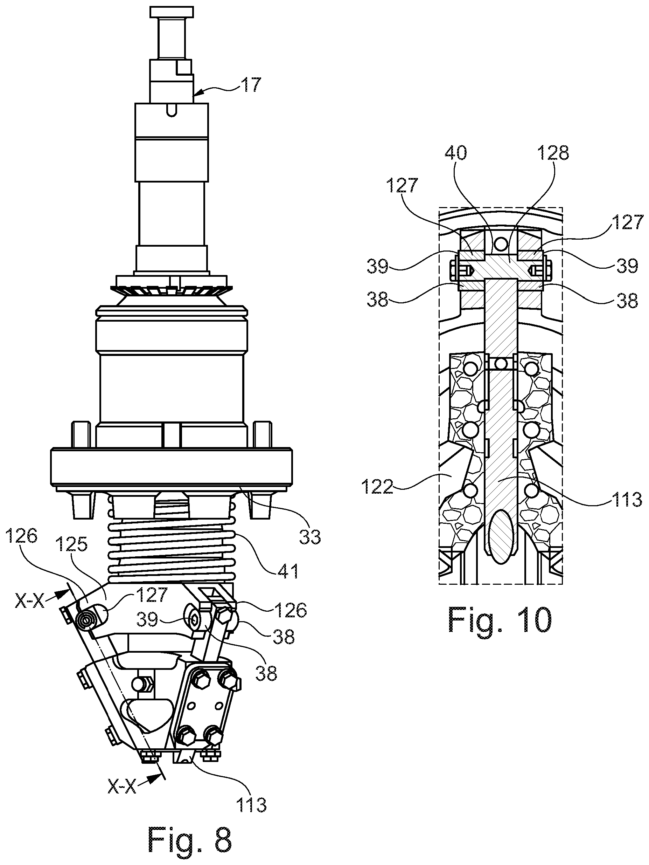

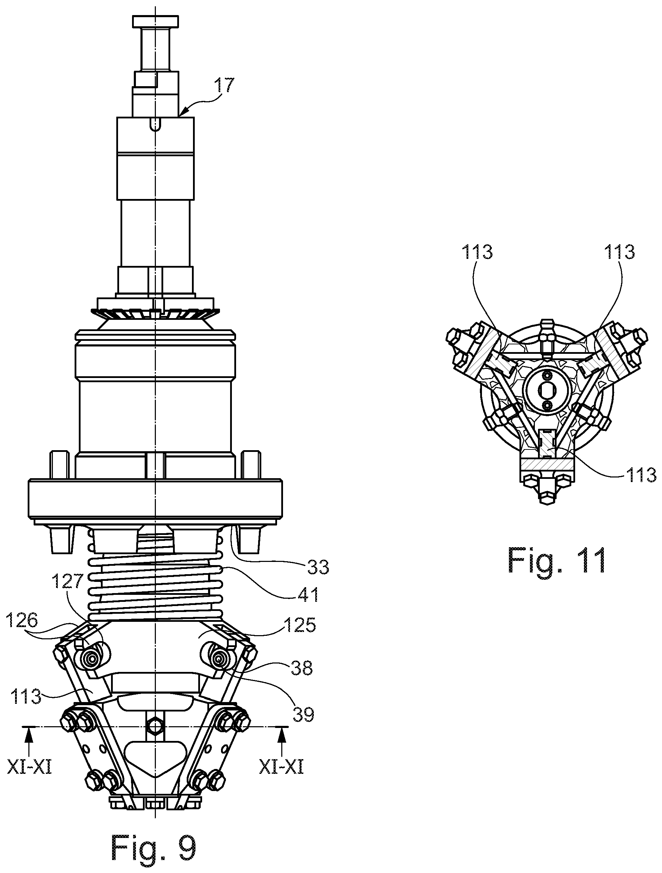

Also in this case an annular crown 125 is provided, external to both the bodies 16, 17, to which the fingers 113 are constrained in an articulated manner. More precisely, as can also be seen from the figures, in particular from Figs. 10 and 11, the annular crown 125 is provided at the top with three pairs of forks 126, arranged at 120° from one another, in pairs of outward facing openings 127 of which a pin 128 is positioned.

In this case, the pin 128 passes through a hole 40 of the single finger 113 and is provided in its end areas with rollers 38 for sliding inside the outward facing openings 127 of the pairs of forks 126. The rollers 38 are held in position by two Seeger rings 39 positioned at opposite ends of the pin 128 and of the rollers 38 and collaborating with screws 40 screwed into the pin 128 on opposite sides.

Above the annular crown 125 there is provided resting on its upper surface a helical spring 41 that abuts against an upper annular crown 33, integral with the first hollow outer body 16 below the central part of the outer structure 12 in which the pair of bearings 15 is arranged.

This spring 41, coaxial to the chuck, normally maintains the enlarged extension 121 of the second hollow inner body 17, carrying the fingers 113, normally lowered creating the gripping force of said fingers on the glass tube.

In this way, the spring 41 acts to maintain the fingers 113, thrust downwards engaging on glass tube 14, idle.

A further difference relative to the previous embodiment is the shape in section of the fingers 113, which being quadrilateral is better guided in its movement to engage on and disengage from the glass tube.

This embodiment also has the same advantages as those described above.

In this way the objects mentioned in the introduction of the description are achieved.

The scope of protection of the present invention is defined by the appended claims.

## Claims

1. Chuck (11) for handling a glass tube loaded therein comprising an outer structure (12) in which there are arranged a pair of bearings (15) for supporting a first hollow outer body (16) and a second inner body (17), hollow and essentially tubular, which are coaxial to each other and both rotating,
wherein said first hollow outer body (16) carries integral therewith, in a part opposite the part in which the gripping fingers (13, 113) are arranged, a rotor (18) that collaborates with a stator (19) of a direct motorization assembly (20) of the chuck (11), where said stator (19) is integral with the outer load bearing structure (12),
wherein said first hollow outer body (16) is provided, at a lower free end thereof, with an extension (21, 121) enlarged outwards in which there are provided oriented seats or holes (22, 122) for housing and sliding of the gripping fingers (13, 113), arranged at 120° from one another, where said seats (22, 122) are inclined converging towards an axis (X) of the chuck (11) by an angle of at least 45° so that ends of the fingers (13, 113), when the fingers are translated inside the seats (22, 122), contact, or do not contact, a glass tube (14), wherein said fingers (13, 113) can translate between a lowered position for gripping the glass tube (14) and a raised position for releasing the glass tube (14),
wherein said second hollow inner body (17) can translate axially relative to the first hollow outer body (16) and determines the translation of said fingers (13, 113) in said seats (22, 122),
said fingers (13, 113) being constrained in an articulated manner to forks (26, 126) arranged on an annular crown (25, 125) that slides on said first hollow outer body (16) and that is held in normally lowered position to carry said fingers to engage on said glass tube (14) by at least one spring (32, 41) arranged between said annular crown (25, 125) integral with said second hollow inner body (17), and an upper annular crown (33), integral with the first hollow outer body (16).

2. Chuck according to claim 1, **characterized in that** each chuck (11) is provided with three fingers (13, 113) that can be moved to engage on or disengage from the glass tube (14) and are actuated by means of a control lever (23) external to the chuck that axially translates said second inner body (17) relative to said first hollow outer body (16).

3. Chuck according to claim 1 or 2, **characterized in that** said second inner body (17) carrying the enlarged extension (21, 121) moves axially relative to the load bearing structure (12) and to the first hollow inner body (16) and **in that** the second hollow inner body (17) is constrained by means of grub screws or lock screws (24) to said outer annular crown (25, 125) to which the fingers (13, 113) are constrained in an articulated manner.

4. Chuck according to one or more of the preceding claims, **characterized in that** said bearings (15) are arranged in a cartridge constrained to the outer load bearing structure (12) of the chuck.

5. Chuck according to one or more of the preceding claims, **characterized in that** said annular crown (25) is provided at the top with three pairs of said forks (26), arranged at 120° from one another, in outward facing openings (27) of which a pin (28) is positioned, said pin being provided with a through hole (29) in which a cotter pin (30) is positioned, which constrains the respective finger (13) to said pin (28).

6. Chuck according to claim 5, **characterized in that** above the annular crown (25) on respective columns (31) there are provided, for each of the three pairs of forks (26), pairs of springs (32) that abut against said upper annular crown (33), integral with the first hollow outer body (16) below the central part of the outer structure (12) in which said pair of bearings (15) is arranged.

7. Chuck according to one or more of the preceding claims 1 to 4, **characterized in that** said annular crown (25) is provided at the top with three pairs of said forks (26), arranged at 120° from one another, in outward facing openings (127) of which a pin (128) is positioned, said pin being positioned in a hole (40) of the single finger (113) and being provided in its end areas with rollers (38) that slide inside said outward facing openings (127) of the pairs of forks (126), wherein said rollers (38) are held in position by two Seeger rings (39) positioned at opposite ends of the pin (128) and outside the rollers (38) and collaborating with screws (40) screwed into the pin (128) on opposite sides.

8. Chuck according to claim 7, **characterized in that** above the annular crown (125) there is provided resting on the upper surface a helical spring (41) coaxial with the chuck that abuts against an upper annular crown (33), integral with the first hollow outer body (16) below the central part of the outer structure (12) in which the pair of bearings (15) is arranged.

9. Chuck according to one or more of the preceding claims, **characterized in that** said second hollow inner body (17) acts as element for controlling the movement of the fingers (13) between a position engaged on the glass tube (14) and a position disengaged from the glass tube.

10. Chuck according to one or more of the preceding claims, **characterized in that** the axial movement of the second hollow inner body (17) relative to the first hollow outer body (16) is allowed due to the fact that the grub screws or lock screws (24) of the second hollow inner body (17) to the annular crown (25) pass through axial slots (34) made in the first hollow outer body (16), which can only rotate but cannot move axially.

11. Chuck according to one or more of the preceding claims 1 to 6, **characterized in that** said fingers (13) have a circular or oval shape in section.

12. Chuck according to one or more of the preceding claims 7 to 10, **characterized in that** said fingers (13) have a quadrilateral shape in section.

## Patentansprüche

1. Spannfutter (11) zum Handhaben einer darin geladenen Glasröhre, umfassend eine äußere Struktur (12), in der ein Paar von Lagern (15) zum Stützen eines ersten hohlen äußeren Körpers (16) und eines zweiten inneren Körpers (17), der hohl und im Wesentlichen röhrenförmig ist, angeordnet sind, die koaxial zueinander sind und sich beide drehen,
wobei der erste hohle äußere Körper (16) in einem Teil, der dem Teil, in dem die Greiffinger (13, 113) angeordnet sind, gegenüberliegt, einen Rotor (18) trägt, der mit einem Stator (19) einer direkten Motorbaugruppe (20) des Spannfutters (11) zusammenwirkt, wobei der Stator (19) einstückig mit der äußeren lasttragenden Struktur (12) ist,
wobei der erste hohle äußere Körper (16) an seinem unteren freien Ende mit einer nach außen erweiterten Verlängerung (21, 121) bereitgestellt ist, in der ausgerichtete Sitze oder Löcher (22, 122) zur Aufnahme und zum Gleiten der Greiffinger (13, 113) bereitgestellt sind, die in einem Winkel von 120° zueinander angeordnet sind, wobei die Sitze (22, 122) um einen Winkel von mindestens 45° konvergierend zu einer Achse (X) des Spannfutters (11) geneigt sind, sodass die Enden der Finger (13, 113), wenn die Finger innerhalb der Sitze (22, 122) verschoben werden, eine Glasröhre (14) berühren oder nicht berühren, wobei die Finger (13, 113) zwischen einer abgesenkten Position zum Ergreifen der Glasröhre (14) und einer erhabenen Position zum Freigeben der Glasröhre (14) verschoben werden können,
wobei der zweite hohle innere Körper (17) sich relativ zum ersten hohlen äußeren Körper (16) axial verschieben kann und die Translation der Finger (13, 113) in den Sitzen (22, 122) bestimmt,
die Finger (13, 113) gelenkig an Gabeln (26, 126) gehalten werden, die an einem ringförmigen Kranz (25, 125) angeordnet sind, der auf dem ersten hohlen äußeren Körper (16) gleitet und der in einer normalerweise abgesenkten Position gehalten wird, um die Finger zu tragen, damit sie in die Glasröhre (14) eingreifen, und zwar durch mindestens eine Feder (32, 41), die zwischen dem ringförmigen Kranz (25, 125), der fest mit dem zweiten hohlen inneren Körper (17) verbunden ist, und einem oberen ringförmigen Kranz (33) angeordnet ist, der fest mit dem ersten hohlen äußeren Körper (16) verbunden ist.

2. Spannfutter nach Anspruch 1, **dadurch gekennzeichnet, dass** jedes Spannfutter (11) mit drei Fingern (13, 113) bereitgestellt wird, die bewegt werden können, um in die Glasröhre (14) einzugreifen oder sich von ihr zu lösen, und die mittels eines Steuerhebels (23) außerhalb des Spannfutters betätigt werden, der den zweiten inneren Körper (17) relativ zu dem ersten hohlen äußeren Körper (16) axial verschiebt.

3. Spannfutter nach Anspruch 1 oder 2, **dadurch gekennzeichnet, dass** der zweite innere Körper (17), der die vergrößerte Verlängerung (21, 121) trägt, sich axial relativ zu der lasttragenden Struktur (12) und zu dem ersten hohlen inneren Körper (16) bewegt, und dass der zweite hohle innere Körper (17) mittels Gewindestiften oder Feststellschrauben (24) an dem äußeren ringförmigen Kranz (25, 125) festgehalten wird, an dem die Finger (13, 113) gelenkig befestigt sind.

4. Spannfutter nach einem oder mehreren der vorstehenden Ansprüche, **dadurch gekennzeichnet, dass** die Lager (15) in einer Patrone angeordnet sind, die an der äußeren lasttragenden Struktur (12) des Spannfutters befestigt ist.

5. Spannfutter nach einem oder mehreren der vorstehenden Ansprüche, **dadurch gekennzeichnet, dass** der ringförmige Kranz (25) an der Oberseite mit drei Paaren der Gabeln (26) bereitgestellt wird, die in einem Winkel von 120° zueinander angeordnet sind und in deren nach außen weisenden Öffnungen (27) ein Stift (28) positioniert ist, wobei der Stift mit einem Durchgangsloch (29) bereitgestellt wird, in dem ein Keilstift (30) positioniert ist, der den jeweiligen Finger (13) an dem Stift (28) festhält.

6. Spannfutter nach Anspruch 5, **dadurch gekennzeichnet, dass** oberhalb des ringförmigen Kranzes (25) auf jeweiligen Säulen (31) für jedes der drei Gabelpaare (26) Paare von Federn (32) bereitgestellt werden, die an dem oberen ringförmigen Kranz (33) anliegen und mit dem ersten hohlen äußeren Körper (16) unterhalb des zentralen Teils der äußeren Struktur (12), in dem das Paar von Lagern (15) angeordnet ist, einstückig sind.

7. Spannfutter nach einem oder mehreren der vorstehenden Ansprüche 1 bis 4, **dadurch gekennzeichnet, dass** der ringförmige Kranz (25) an der Oberseite mit drei Paaren der Gabeln (26) bereitgestellt ist, die in einem Winkel von 120° zueinander angeordnet sind und in deren nach außen gerichteten Öffnungen (127) ein Stift (128) positioniert ist, wobei der Stift in einem Loch (40) des einzelnen Fingers (113) positioniert ist und in seinen Endbereichen mit Rollen (38) bereitgestellt wird, die in den nach außen gerichteten Öffnungen (127) der Gabelpaare (126) gleiten, wobei die Rollen (38) durch zwei Seeger-Ringe (39) in Position gehalten werden, die an gegenüberliegenden Enden des Stifts (128) und außerhalb der Rollen (38) positioniert sind und mit Schrauben (40) zusammenwirken, die auf gegenüberliegenden Seiten in den Stift (128) geschraubt sind.

8. Spannfutter nach Anspruch 7, **dadurch gekennzeichnet, dass** oberhalb des ringförmigen Kranzes (125) eine zum Spannfutter koaxiale Schraubenfeder (41) bereitgestellt ist, die an einem oberen ringförmigen Kranz (33) anliegt, der mit dem ersten hohlen äußeren Körper (16) unterhalb des mittleren Teils der äußeren Struktur (12), in der das Lagerpaar (15) angeordnet ist, fest verbunden ist.

9. Spannfutter nach einem oder mehreren der vorstehenden Ansprüche, **dadurch gekennzeichnet, dass** der zweite hohle innere Körper (17) als Element zum Steuern der Bewegung der Finger (13) zwischen einer Position, in der sie in das Glasrohr (14) eingreifen, und einer Position, in der sie von dem Glasrohr gelöst sind, dient.

10. Spannfutter nach einem oder mehreren der vorstehenden Ansprüche, **dadurch gekennzeichnet, dass** die axiale Bewegung des zweiten hohlen inneren Körpers (17) relativ zum ersten hohlen äußeren Körper (16) dadurch ermöglicht wird, dass die Gewindestifte oder Sicherungsschrauben (24) des zweiten hohlen inneren Körpers (17) zur ringförmigen Krone (25) durch axiale Schlitze (34) im ersten hohlen äußeren Körper (16) hindurchgehen, der sich nur drehen, aber nicht axial bewegen kann.

11. Spannfutter nach einem oder mehreren der vorstehenden Ansprüche 1 bis 6, **dadurch gekennzeichnet, dass** die Finger (13) im Abschnitt eine kreisförmige oder ovale Form aufweisen.

12. Spannfutter nach einem oder mehreren der vorstehenden Ansprüche 7 bis 10, **dadurch gekennzeichnet, dass** die Finger (13) im Abschnitt eine viereckige Form aufweisen.

## Revendications

1. Mandrin (11) pour la manipulation d'un tube en verre chargé à l'intérieur, comprenant une structure extérieure (12) dans laquelle sont agencés une paire de paliers (15) pour supporter un premier corps extérieur creux (16) et un second corps intérieur (17), creux et essentiellement tubulaire, qui sont coaxiaux l'un à l'autre et tous deux en rotation,
dans lequel ledit premier corps extérieur creux (16) porte, dans une partie opposée à celle où sont agencés les doigts de préhension (13, 113), un rotor (18) qui collabore avec un stator (19) d'un ensemble de motorisation directe (20) du mandrin (11), ledit stator (19) étant solidaire de la structure porteuse de charge extérieure (12),
dans lequel ledit premier corps extérieur creux (16) est muni, à son extrémité libre inférieure, d'une extension (21, 121) élargie vers l'extérieur dans laquelle sont prévus des logements ou trous orientés (22, 122) pour loger et faire coulisser les doigts de préhension (13, 113), agencés à 120° l'un de l'autre, lesdits logements (22, 122) étant inclinés convergeant vers un axe (X) du mandrin (11) d'un angle d'au moins 45° de sorte que les extrémités des doigts (13, 113), lorsque les doigts sont déplacés à l'intérieur des logements (22, 122), entrent en contact, ou non, avec un tube de verre (14), lesdits doigts (13, 113) pouvant se déplacer entre une position basse pour saisir le tube de verre (14) et une position haute pour libérer le tube de verre (14),
dans lequel ledit second corps intérieur creux (17) peut se déplacer axialement par rapport au premier corps extérieur creux (16) et détermine la translation desdits doigts (13, 113) dans lesdits logements (22, 122),
lesdits doigts (13, 113) étant contraints de manière articulée à des fourchettes (26, 126) agencées sur une couronne annulaire (25, 125) qui glisse sur ledit premier corps extérieur creux (16) et qui est maintenue en position normalement abaissée pour amener lesdits doigts à entrer en prise sur ledit tube de verre (14) par au moins un ressort (32, 41) agencé entre ladite couronne annulaire (25, 125) solidaire dudit second corps intérieur creux (17), et une couronne annulaire supérieure (33), solidaire du premier corps extérieur creux (16).

2. Mandrin selon la revendication 1, **caractérisé en ce que** chaque mandrin (11) est muni de trois doigts (13, 113) qui peuvent être déplacés pour entrer en prise ou être hors prise du tube en verre (14) et sont actionnés au moyen d'un levier de commande (23) extérieur au mandrin qui déplace axialement ledit second corps intérieur (17) par rapport audit premier corps extérieur creux (16).

3. Mandrin selon la revendication 1 ou 2, **caractérisé en ce que** ledit second corps intérieur (17) portant l'extension élargie (21, 121) se déplace axialement par rapport à la structure porteuse de charge (12) et au premier corps intérieur creux (16) et **en ce que** le second corps intérieur creux (17) est contraint au moyen de vis de blocage ou de vis de verrouillage (24) à ladite couronne annulaire extérieure (25, 125) à laquelle les doigts (13, 113) sont contraints de manière articulée.

4. Mandrin selon l'une ou plusieurs des revendications précédentes, **caractérisé en ce que** lesdits roulements (15) sont agencés dans une cartouche contrainte à la structure porteuse de charge extérieure (12) du mandrin.

5. Mandrin selon l'une ou plusieurs des revendications précédentes, **caractérisé en ce que** ladite couronne annulaire (25) est munie en haut de trois paires desdites fourches (26), agencées à 120° l'une de l'autre, dans des ouvertures orientées vers l'extérieur (27) dans lesquelles une goupille (28) est positionnée, ladite goupille étant munie d'un trou traversant (29) dans lequel une goupille fendue (30) est positionnée, qui contraint le doigt respectif (13) à ladite goupille (28).

6. Mandrin selon la revendication 5, **caractérisé en ce que**, au-dessus de la couronne annulaire (25) sur les colonnes respectives (31), sont prévues, pour chacune des trois paires de fourches (26), des paires de ressorts (32) qui butent contre ladite couronne annulaire supérieure (33), faisant partie intégrante du premier corps extérieur creux (16) sous la partie centrale de la structure extérieure (12) dans laquelle est agencée ladite paire de paliers (15).

7. Mandrin selon l'une ou plusieurs des revendications précédentes 1 à 4, **caractérisé en ce que** ladite couronne annulaire (25) est munie en partie supérieure de trois paires desdites fourches (26), agencées à 120° les unes des autres, dans des ouvertures orientées vers l'extérieur (127) dans lesquelles est positionnée une goupille (128), ladite goupille étant positionnée dans un trou (40) du doigt unique (113) et étant munie à ses extrémités de rouleaux (38) qui coulissent à l'intérieur desdites ouvertures orientées vers l'extérieur (127) des paires de fourches (126), lesdits rouleaux (38) étant maintenus en position par deux anneaux Seeger (39) positionnés aux extrémités opposées de la goupille (128) et à l'extérieur des rouleaux (38) et collaborant avec des vis (40) vissées dans la goupille (128) de part et d'autre.

8. Mandrin selon la revendication 7, **caractérisé en ce que**, au-dessus de la couronne annulaire (125), repose sur la surface supérieure un ressort hélicoïdal (41) coaxial avec le mandrin qui bute contre une couronne annulaire supérieure (33), solidaire du premier corps extérieur creux (16) situé sous la partie centrale de la structure extérieure (12) dans laquelle est agencée la paire de paliers (15).

9. Mandrin selon l'une ou plusieurs des revendications précédentes, **caractérisé en ce que** ledit second corps intérieur creux (17) sert d'élément pour commander le mouvement des doigts (13) entre une position en prise sur le tube de verre (14) et une position hors prise du tube de verre.

10. Mandrin selon l'une ou plusieurs des revendications précédentes, **caractérisé en ce que** le mouvement axial du second corps intérieur creux (17) par rapport au premier corps extérieur creux (16) est autorisé du fait que les vis de blocage ou les vis de verrouillage (24) du second corps intérieur creux (17) à la couronne annulaire (25) passent à travers des fentes axiales (34) réalisées dans le premier corps extérieur creux (16), qui ne peut que tourner mais ne peut pas se déplacer axialement.

11. Mandrin selon l'une ou plusieurs des revendications précédentes 1 à 6, **caractérisé en ce que** lesdits doigts (13) ont une forme circulaire ou ovale en section.

12. Mandrin selon l'une ou plusieurs des revendications précédentes 7 à 10, **caractérisé en ce que** lesdits doigts (13) ont une forme quadrilatérale en section.
